Europäisches Patentamt

European Patent Office

Office européen des brevets

(11) Veröffentlichungsnummer: **0 260 595 B1**

# (12) EUROPÄISCHE PATENTSCHRIFT

(45) Veröffentlichungstag der Patentschrift: **10.03.93**

(21) Anmeldenummer: **87113205.6**

(22) Anmeldetag: **09.09.87**

(51) Int. Cl.5: **G02F 1/03**, G02B 6/12, G02B 6/14, G02B 6/28

(54) **Anordnung zur kontinierlichen, rücksetzfreien Polarisations- und Phasenkontrolle.**

(30) Priorität: **18.09.86 DE 3631798**

(43) Veröffentlichungstag der Anmeldung:
**23.03.88 Patentblatt 88/12**

(45) Bekanntmachung des Hinweises auf die Patenterteilung:
**10.03.93 Patentblatt 93/10**

(84) Benannte Vertragsstaaten:
**AT BE CH DE ES FR GB GR IT LI NL SE**

(56) Entgegenhaltungen:
**EP-A- 0 200 594**

**APPLIED PHYSICS LETTERS, Band 45, Nr. 5, 1. September 1984 F.HEISMANN et al. "Integrated-optical frequency translator with stripe waveguide" Seiten 490-492**

**IEEE TRANSACTION ON MICROWAVE THEORY AND TECHNIQUES, Band MTT-30, Nr. 4, April 1982 F.HEISMANN et al. "Integrated-Optical Single-Sideband Modulator and Phase Shifter" Seiten 613-617**

**ELECTRONICS LETTERS, Band 22, Nr. 3, 30 January 1986 C.H.VON HELMOLT "Broadband Single-Mode TE/TM Convertors in LiNbO3:a Novel Design" Seiten 155-156**

(73) Patentinhaber: **SIEMENS AKTIENGESELL-SCHAFT**
**Wittelsbacherplatz 2**
**W-8000 München 2(DE)**

(72) Erfinder: **Nolting, Hans-Peter, Dr.**
**Ringslebenstrasse 68**
**W-1000 Berlin 47(DE)**
Erfinder: **Heidrich, Helmut, Dr.**
**Schneeballenweg 18**
**W-1000 Berlin 47(DE)**
Erfinder: **Hoffmann, Detlef, Dr.**
**Lüdtgeweg 14**
**W-1000 Berlin 10(DE)**

**Beschreibung**

Die vorliegende Erfindung betrifft eine Anordnung zur kontinuierlichen, rücksetzfreien Polarisations- und Phasenkontrolle nach dem Oberbegriff des Patentanspruchs 1.

Eine Anordnung der genannten Art ist aus U. Heismann, R. Ulrich: Integrated-Optical Single-Sideband Modulator and Phase Shifter, IEEE Transactions on Microwave and Technique, MTT-30 (1982), S. 613-617 bekannt. Bei dieser bekannten Anordnung besteht der Wellenleiter aus einem in die Oberfläche eines in x-Richtung geschnittenen Lithiumniobatkristalls diffundierten Streifenwellenleiter, der in y-Richtung und damit senkrecht zur z-Achse oder optischen Kristallachse dieses doppelbrechenden Kristalls verläuft. Dadurch haben in diesem Wellenleiter der TE-Mode und der TM-Mode voneinander verschiedene Ausbreitungskonstanten $\beta_1$ bzw. $\beta_2$, die bezogen auf dieses Kristallmaterial und diesen Kristallschnitt sogar maximal voneinander verschieden sind.

In jeden Streckenabschnitt der festen Periodenlänge entfällt bei dieser Anordnung ein Funktionsstellenpaar, wobei der Abstand zwischen den beiden Funktionsstellen eines Paares kleiner ist als der Abstand zwischen benachbarten Funktionsstellenpaaren.

Die feste Periodenlänge kann gleich der Schwebungswellenlänge zwischen dem TE-Mode und dem TM-Mode bei der durch das Kristallmaterial vorgegebenen Wellenlänge oder einen ganzzahligen Vielfachen davon sein. In den angegebenen Ausführungsformen ist die Periodenlänge dreimal so groß gewählt.

Den Funktionsstellen sind der Reihe nach abwechselnd zwei Koppelfaktoren zugeordnet, von denen der eine proportional zu sin $\eta$, der andere proportional zu cos $\eta$ = sin $(\eta + \pi/2)$ ist.

Die Funktionsstellen selbst sind bei den Ausführungsformen durch kammförmige, ineinander greifende Elektrodenstrukturen definiert, die über dem Wellenleiter auf dem Substrat angeordnet sind.

Die bekannte Anordnung nutzt sowohl die intrinsische als auch eine unter einem kleinen Winkel zur intrinsischen Doppelbrechung elektro-optisch induzierte Doppelbrechung aus. Der rücksetzfreie oder kontinuierliche Betrieb der Polarisationskonversion zwischen dem TE-Mode und dem TM-Mode bei fortlaufender Polarisationstrift wird durch Anwendung des Prinzips des Zweiphasensynchronmotors auf die integrierte Optik erreicht.

Die durch das Kristallmaterial vorgegebene Wellenlänge $\lambda_0$ von 0,6 $\mu$m oder 1,3 $\mu$m bedingt sehr kurze Schwebungswellenlängen von 7 $\mu$m bzw. 16 $\mu$m und damit eine sehr kurze Periodenlänge. Die sehr kurze Periodenlänge erfordert für eine vollständige Polarisationskonversion zwischen den zueinander orthogonal polarisierten Moden sehr viele Perioden, d. h. Streckenabschnitte dieser Länge. Dies resultiert in einer extremen Schmalbandigkeit der Anordnung, die kleiner als 2 nm ist.

Aus C.H. von Helmolt: Broadband Single-mode TE/TM convertors in LiNbO$_3$: a noval design, Electron. Lett. 22 (1986) S. 155 ist ein TE-TM-Konverter bekannt, bei dem an der Oberfläche eines in y-Richtung geschnittenen Lithiumniobatkristalls ein Streifenwellenleiter unter einen Winkel $\theta < 90°$ zur x-Achse des Kristalls verläuft. Längs dieses Streifenwellenleiters sind äquidistante Elektroden angeordnet, die der Reihe nach abwechselnd mit einer positiven und einer negativen elektrischen Spannung zu beaufschlagen sind. Die Reihe der Elektroden ist in Streckenabschnitte einer festen Periodenlänge derart unterteilt, daß in jeden Streckenabschnitt zwei Elektroden entfallen.

Dieser Konverter weist im Vergleich zu einem entsprechenden Konverter, bei dem der Streifenwellenleiter parallel zur x-Achse und damit senkrecht zur Kristall-oder z-Achse des Kristalls verläuft, eine höhere Bandbreite auf. Bei einem Winkel $\theta = 80°$ wird beispielsweise bei der vorgegebenen Wellenlänge $\lambda_0 = 1,3$ $\mu$m eine relative Bandbreite $(\lambda - \lambda_0)/\lambda_0$ von 3,2 % erreicht. Für eine vollständige Polarisationskonversion sind dabei 22 Streckenabschnitte der festen Periodenlänge erforderlich. Die feste Periodenlänge selbst beträgt etwa 0,55 mm und damit etwa das 423 fache der vorgegebenen Wellenlänge $\lambda_0$.

Aufgabe der vorliegenden Erfindung ist es, aufzuzeigen, wie die Breitbandigkeit einer Anordnung der eingangs genannten Art stark erhöht werden kann.

Diese Aufgabe wird durch die im kennzeichnenden Teil des Patentanspruchs 1 angegebenen Merkmale gelöst.

Bei dieser Lösung wird ein vergrößerter nutzbarer Wellenlängenbereich zunächst durch das Merkmal a) erreicht, das ein kleines m gewährleistet. Durch das zusätzliche Merkmal c) wird der nutzbare Wellenlängenbereich dann extrem dadurch verbessert, daß eine die Funktionsstellen der Anordnung definierende geometrisch fixierte Elektrodenstruktur, deren feste Periodenlänge $L = j \cdot \Lambda_0$ mit $j = 1,2,3,...$, vorzugsweise $j = 1$ (Anspruch 2), die Wellenlänge $\lambda_0$ vorgibt, elektrisch variabel an die Betriebswellenlänge $\lambda_1$ angepaßt wird. Es kann dabei eine Wellenlängenbereichserweiterung von einer Oktav, d. h. $\Delta\beta \cdot (\lambda_0)/4 \leq \Delta\beta(\lambda_1)/2 \leq \Delta\beta \cdot (\lambda_0)$, und mehr ohne Änderung der Charakteristik erreicht werden. Die 3-dB-Halbwertsbreite im Fall der festen Periodenlänge, also ohne elektrische Anpassung an die Betriebswellenlänge beträgt $\Delta_{HWB}/\Delta\beta(\lambda_0) = l/m$.

Wie bei U. Heißmann und R. Ulrich führt auch bei der erfindungsgemäßen Anordnung eine Variation der Steuergröße $\eta$ zu einer unbegrenzt arbeitenden Phasenverschiebung und ein Variation des Maximalwertes $\chi_0$ zu einer Polarisationsrotation. Auch bei der erfindungsgemäßen Anordnung wird die Tatsache ausgenützt, daß bei reiner TE- oder TM-Polarisation ein Phasensprung ohne Beeinflußung der folgenden optischen Schaltung möglich ist.

Durch die erfindungsgemäße Anordnung ist eine Anordnung mit elektrisch abstimmbarer Periodenlänge geschaffen, die sich vorzugsweise dafür eignet, umvermeidbare Herstellungstoleranzen zu kompensieren.

Die erfindungsgemäße Anordnung ist als ein einheitliches Bauelement realisierbar, das sowohl die Transformation des Polarisations- als auch des Phasenwinkels von einen beliebigen Anfangs- in einen beliebigen Endzustand durchführt.

Da bei der erfindungsgemäßen Anordnung m klein ist, konnte die bei U. Heißmann und R. Ulrich beschriebene linearsierte Theorie für sehr große m nicht angewendet werden, sondern es mußte auf die exakten Gleichungen in der Coupled-Mode-Theorie zur Beschreibung eines Polarisationskonverters zurückgegriffen werden, und insbesondere der Grad der Nichtlinearität der Kennlinien des Bauelements für m gegen 1 ermittelt werden. Für eine Regelung der erfindungsgemäßen Anordnung sind dabei monoton steigende oder fallende Kennlinien ohne Überschwinger notwendig. Eine Analyse ergab, daß der Polarisations- und Phasenwinkel für m > 2 oder 3 eine eindeutige Funktion der variablen $\chi_0$ und $\eta$ sind. Zur Erzielung einer hinreichend geraden Funktion ist es empfehlenswert $5 \leq m \leq 10$ zu wählen (Anspruch 3), wobei es zweckmäßig ist, für die bevorzugte Periodenlänge L = $\Lambda_0$ mindestens das zweihundert- bis siebenhundertfache der vorgegebenen Wellenlänge $\lambda_0$ zu wählen (Anspruch 4).

Eine betragsmäßig kleine Differenz $\Delta\beta$ zwischen den Ausbreitungskonstanten $\beta_1$ und $\beta_2$ der beiden zueinander orthogonal polarisierten Wellen kann durch die im Anspruch 5 angegebenen Maßnahmen erreicht werden, bei denen eine kleine intrinsische Doppelbrechung gegeben ist.

Zur Kompensierung unvermeidbarer Herstellungstoleranzen ist es dabei jedoch zweckmäßig, die im Anspruch 6 angegebenen Maßnahmen zu Ergreifen, mit denen eine elektrooptisch induzierte Doppelbrechung erzeugbar ist, durch die Abweichungen von der gewünschten intrinsischen Doppelbrechung ausgeglichen oder die gewünschte Doppelbrechung eingestellt werden kann.

Die Funktionsstellen der erfindungsgemäßen Anordnung sind durch individuelle Elektrodenanordnungen definiert, die im allgemeinen materialabhängig sind. Die im Anspruch 1 angegebene Elektrodenanordnung ist eine für Lithiumniobat aber auch andere Materialien geeignete Realisierungsmöglichkeit. In Bezug auf die dort angegebene Gleichung

$$U_i = U_0 \sin(\eta + (i-1) \cdot \pi \cdot \Lambda_0/2\Lambda_1)$$ ist $\chi_i$ proportional zu $U_i$ und $_0$ proportional zu $U_0$, wonach eine Variation von $U_0$ zu einer Polarisationsänderung führt. Im Vergleich zu einer Anordnung, die nur n = 2 anstelle von n = 4 Funktionsstellen aufweist, aber sonst gleich gebaut ist, und deren definierende Elektroden zur Erzielung einer vollständigen Polarisationskonversion der Reihe nach alternierend mit den Spannungswerten $+U_a$ und $-U_a$ zu beaufschlagen seien, muß zur Erzielung der vollständigen Polarisationskonversion $U_0$ größer als $U_a$ und zwar $U_0 = \sqrt{2} \cdot U_a$ gewählt werden.

Bei der im Anspruch 7 angegebenen zweckmäßigen Ausgestaltung der erfindungsgemäßen Anordnung kann die Beeinflußung eines Modes durch eine unmittelbar auf den Wellenleiter aufgebrachte Elektrode vermieden werden.

Eine Ausgestaltung einer erfindungsgemäßen Anordnung auf Lithiumniobatbasis geht aus Anspruch 8 hervor, während die Ansprüche 9 und 10 eine Ausführungsform auf der Basis quartärnären Materials angeben. Während bei Lithiumniobat Wellenlängen von 0,6 $\mu$m oder 1,3 $\mu$m zu verwenden sind, liegt bei InGaAsP/InP die zu verwendende Wellenlänge bei mehr als 1 $\mu$m. Die Verwendung von Rippenwellenleitern (ridge wave guide oder RWG) auf quartärnären Schichten führt materialbedingt auf große Periodenlängen L = $\Lambda_0$ in der Größenordnung von L = 300 bis 700 $\mu$m mit vergrößerter Bandbreite (hinsichtlich der Orientierung des RWG in Bezug auf die optische Kristallachse bei einem solchen Material siehe DE-OS 36 00 548).

Bevorzugterweise sind bei einer erfindungsgemäßen Anordnung die Funktionsstellen gemäß Anspruch 11 äquidistant angeordnet.

Die erfindungsgemäße Anordnung kann als abstimmbares Filter mit sehr großem Abstimmbereich oder als wellenlängenselektiver Schalter verwendet werden.

Ein Ausführungsbeispiel der Erfindung wird anhand der Figuren in der folgenden Beschreibung näher erläutert.

In den Figuren zeigen:

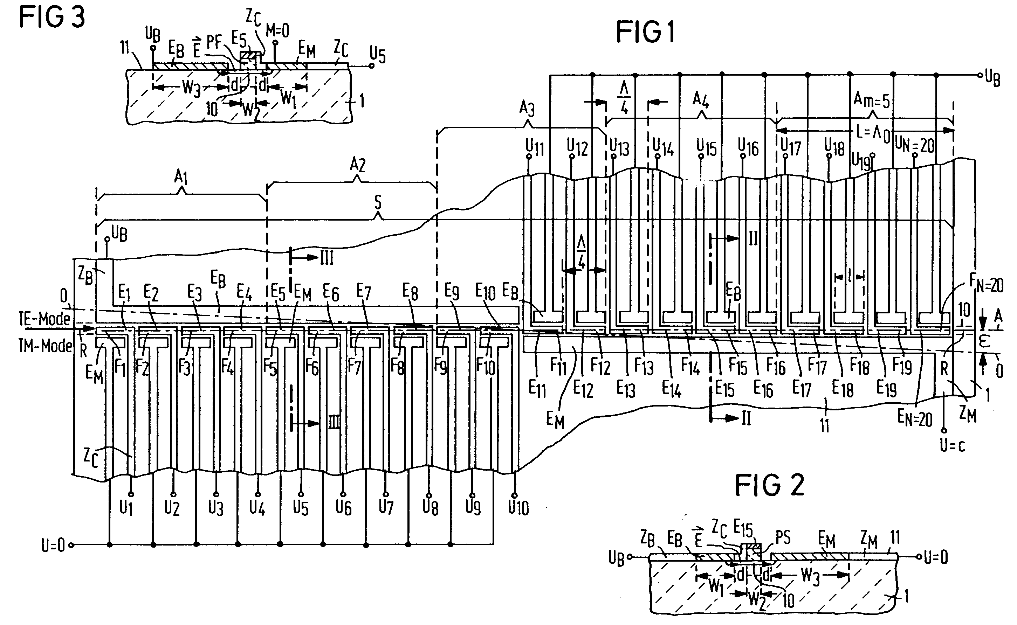

Figur 1      eine Draufsicht auf die beispielhafte Anordnung zur kontinuierlichen, rücksetzfreien Polarisations- und Phasenkontrolle im folgenden kurz als POLTRA bezeichnet,

Figur 2      einen Querschnitt längs der Linie II-II durch den POLTRA und

Figur 3      einen Querschnitt längs der Linie III-III durch den POLTRA.

Bei dem dargestellten POLTRA besteht das Substrat 1 aus Lithiumniobat und der Streifenwellenleiter 10 aus einem an der Oberfläche 11 dieses Substrats eindiffundierten Wellenleiter. Die Längsachse A des Streifenwellenleiters 10 verläuft unter einem sehr kleinen Winkel $\epsilon$ zur optischen Kristallachse 0 des doppelbrechenden Substrats 1.

Über dem Streifenwellenleiter 10 sind auf einer in m = 5 Streckenabschnitte gleicher Periodenlänge L = $\Lambda_0$ unterteilten Strecke S gleich N = 20 Einzelelektroden angeordnet, die in der bestimmten Richtung R von links nach rechts mit $E_1$ bis $E_{N=20}$ bezeichnet sind. Dieses Einzelelektroden $E_1$ bis $E_{N=20}$ sind äquidistant angeordnet und ihre Länge l ist so klein gewählt, daß jeweils n = 4 Einzelelektroden auf einen Streckenabschnitt $A_l$ bis $A_{m=5}$ entfallen. Der Abstand zwischen zwei Einzelelektroden beträgt somit L/4.

An jede Einzelelektrode $E_i$ ist über eine zugeordnete Zuleitung $Z_c$ eine zugeordnete Spannung $U_i$ anlegbar, die durch

$$U_i = U_0 \sin(\eta + (i-1) \cdot \pi \cdot \Lambda_0 / 2 \cdot \Lambda_1) \text{ mit } i = 1,2,...,N$$

bestimmt ist. Auf diese Weise definieren die Einzelelektroden $E_1$ bis $E_N$ = 20 die Funktionsstellen $F_1$ bis $F_{N=20}$ des POLTRA.

Die Einzelelektroden $E_1$ bis $E_{N=20}$ sind nicht unmittelbar auf der Oberfläche 11 des Substrats 1 aufgebracht, sondern auf einer dazwischenliegenden elektrisch isolierenden optischen Pufferschicht PS, die der ungestörteren Modenführung im Wellenleiter 10 dient.

Unmittelbar auf der Oberfläche 11 des Substrats 1 können dagegen die zu beiden Längsseiten des Streifenwellenleiters 10 angeordneten und über die ganze Länge der Strecke S sich erstreckenden Elektroden $E_B$ und $E_M$ aufgebracht werden, mit denen durch Anlegen einer elektrischen Spannungsdifferenz $U_B$ ein elektrisches Feld E erzeugbar ist, dessen Feldlinien den Streifenwellenleiter 10 über der ganzen Strecke S in Richtung senkrecht zur Längsachse A dieses Wellenleiters 10 von einer Längsseite zur anderen durchsetzen. Beispielsweise dienen die in Bezug auf die bestimmte Richtung R auf der linken Längsseite des Streifenwellenleiters 10 angeordneten Elektroden $E_B$ zum Anlegen einer Spannung $U_B$, während die auf der rechten Längsseite angeordneten Elektroden $E_M$ auf Masse gelegt werden.

Wegen der Zuleitungen $Z_c$ zu den Einzelelektroden $E_1$ bis $E_{N=20}$ sind die Elektroden $E_B$ und $E_M$ im Bereich dieser Zuleitungen $Z_c$ unterbrochen. Auch zu jeder Elektrode $E_B$ und $E_M$ führt eine Zuleitung $Z_B$ bzw. $Z_M$, über welche die zugeordnete Spannung $U_B$ bzw. $U_0$ an die betreffende Elektrode anlegbar ist.

Zur besseren Verteilung der zum Anlegen der Spannungen erforderlichen und nicht dargestellten Kontakte auf dem Substrat sind die Zuleitungen $Z_c$, $Z_b$ und $Z_M$ in einer Hälfte der Strecke S auf einer Seite und in der anderen Hälfte auf der anderen Seite des Streifenwellenleiters 10 angeordnet.

Bei einem konkreten Ausführungsbeispiel besteht der Streifenwellenleiter 10 aus einem Ti-dotierten Wellenleiter, der durch Diffusion mittels einer spaltförmigen Diffusionsmaske von 75 nm Spaltbreite bei 1040°C und einer Diffusionszeit von 6 Stunden und 25 Minuten hergestellt worden ist. Die optische Pufferschicht besteht aus einer 700 nm dicken Schicht aus ITO und die Einzelelektroden $E_1$ bis $E_{N=20}$, $E_B$ und $E_M$ sowie die Zuleitungen $Z_c$, $Z_B$ bzw. $Z_M$ bestehen aus einer 200 nm dicken Goldschicht.

Die Breite $W_2$ der Einzelelektroden beträgt 7 $\mu$m, der Abstand d zwischen einer Einzelelektrode $E_i$ und der benachbarten Elektrode $E_B$ oder $E_M$ beträgt 5 $\mu$m. Die Breite $W_1$ einer zwischen zwei Zuleitungen angeordneten Elektrode $E_B$ bzw. $E_M$ beträgt 20 $\mu$m, während die Breite $W_3$ einer außerhalb von Zuleitungen angeordneten Elektrode $E_B$ bzw. $E_M$ 100 $\mu$m beträgt. Die Länge jeder Einzelelektrode $E_i$ beträgt ohne Berücksichtigung der Breite der Zuleitung $Z_c$ einen Millimeter. Die Breite der Zuleitungen und der Abstand zwischen zwei benachbarten Einzelektroden oder zwischen zwei Benachbarten Elektroden $E_B$ bzw. $E_M$ im Bereich von Zuleitungen beträgt weniger als 100 $\mu$m.

**Patentansprüche**

1. Anordnung zur kontinuierlichen, rücksetzfreien Polarisations- und Phasenkontrolle,
   - mit einem optischen Wellenleiter (10), in dem die Ausbreitungskonstante $\beta_1$ einer in einer bestimmten Richtung (R) sich ausbreitenden optischen Welle (TE- oder TM-Mode) und die Ausbreitungskonstante $\beta_2$ einer ebenfalls in dieser Richtung (R) sich ausbreitenden und zur einen Welle orthogonal polarisierten optischen Welle (TM-Mode bzw. TE-Mode) bei einer vorgegebenen Wellenlänge $\lambda_0$ voneinander verschieden sind, und
   - mit einer Anzahl N = n m definierter Funktionsstellen ($F_i$,i = 1,2,...,N), die in der bestimmten Richtung (R) auf einer in Streckenabschnitte ($A_k$,k = 1,2,...,m) gleicher Periodenlänge L unterteilten Strecke (S) derart mit Abstand nacheinander angeordnet sind, daß in jeden der m Streckenabschnitte ($A_k$) die gleiche Anzahl n Funktionsstellen ($F_i$) fällt,
   - wobei die feste Periodenlänge L gleich oder ein ganzzahliges Vielfaches einer

der vorgegebenen Wellenlänge $\lambda_0$ zugeordneten Schwebungswellenlänge $\Lambda_0$ der beiden Wellen (TE-Mode, TM-Mode) ist,

- wobei durch jede Funktionsstelle ($F_i$) der Polarisationszustand und die Phase der beiden Wellen (TE-Mode, TM-Mode) einstellbar ist,

- wobei die Größe der Einstellung des Polarisationszustandes und der Phase durch einen jeder Funktionsstelle ($F_i$) zugeordneten, variierbaren Koppelfaktor $\chi_i$ bestimmt ist, der durch

$$\chi_i = \chi_0 \sin (\eta + \alpha(i)) \text{ mit } i = 1,2,...,N$$

definiert ist, wobei $\chi_0$ einen variierbaren Maximalwert der Koppelfaktoren $\chi_i$ bedeutet, $\eta$ eine wenigstens im Bereich von 0 bis $2\pi$ einstellbare Steuergröße ist und $\alpha$ (i) eine bestimmte, von der Kennzahl i der Funktionsstellen ($F_i$) abhängige Funktion bedeutet,
dadurch **gekennzeichnet, daß**
a) ein Wellenleiter (10) vorgesehen ist, in dem eine Differenz $\Delta\beta$ ($\lambda$) zwischen den voneinander verschiedenen Ausbreitungskonstanten $\beta_1$ und $\beta_2$ sowie der Maximalwert $\chi_0(\lambda)$, die eine Funktion der Wellenlänge $\lambda$ sind, bei der vorgegebenen Wellenlänge $\lambda_0$ betragsmäßig so klein sind, daß die dieser vorgegebenen Wellenlänge $\lambda_0$ gemäß der Beziehung

$$\Lambda_0 = \pi / \sqrt{(\Delta\beta(\lambda_0)/2)^2 + (\chi_0(\lambda_0))^2}$$

zugeordnete Schwebungswellenlänge $\Lambda_0$ mindestens das hundertfache der vorgegebenen Wellenlänge $\lambda_0$ beträgt,
b) auf jeden Streckenabschnitt ($A_k$) n = 4 Funktionsstellen ($F_i$) entfallen,
c) $\alpha(i) = (i-1) \cdot \pi \cdot \Lambda_0/2 \cdot \Lambda_1$ mit i = 1,2,..., N gewählt ist, wobei $\Lambda_1$ eine Schwebungswellenlänge der beiden zueinander orthogonal polarisierten Wellen (TE-Mode, TM-Mode) ist, die gemäß der Beziehung

$$\Lambda_1 = \pi / \sqrt{(\Delta\beta(\lambda_1)/2)^2 + (\chi_0(\lambda_1))^2}$$

einer Betriebswellenlänge $\lambda_1$ zugeordnet ist, bei der die Anordnung tatsächlich betrieben wird, wobei die Schwebungswellenlänge $\Lambda_1$ im Regelfall ungleich der geometrisch vorgegebenen und die zugeordnete Wellenlänge $\lambda_0$ vorgebenden Schwebungswellenlänge $\Lambda_0$ ist, aber auch gleich dieser sein kann, wobei im allgemeinen $\Lambda_1 \neq \Lambda_0$ für $\lambda_1 \neq \lambda_0$ gilt, und

d) jede Funktions-stelle ($F_i$, i = 1,2,...,N) durch jeweils zumindest eine zugeordnete, über dem Wellenleiter (10) angeordnete Einzelelektrode ($E_i$, i = 1,2,...,N) definiert ist, an die eine der betreffenden Funktionsstelle ($F_i$) zugeordnete elektrische Spannung $U_i$ anlegbar ist, die durch

$$U_i = U_0 \sin (\eta + (i-1) \cdot \pi \cdot \Lambda_0/2\Lambda_1) \text{ mit } i = 1,2,...,N$$

bestimmt ist, wobei $U_0$ eine variierbare Maximalspannung ist, die $U_i$ annehmen kann, und jede elektrische Spannung $U_i$ für jede separate Elektrode ($E_i$, i = 1, 2, ..., N) individuell variierbar ist.

**2.** Anordnung nach Anspruch 1, dadurch **gekennzeichnet,** daß L = $\Lambda_0$ gewählt ist.

**3.** Anordnung nach Anspruch 1 oder 2, dadurch **gekennzeichnet,** daß die Anzahl m der Streckenabschnitte ($A_k$) mit der festen Periodenlänge L zwischen 5 und 10 variiert.

**4.** Anordnung nach einem der vorhergehenden Ansprüche, insbesondere nach Anspruch 3, dadurch **gekennzeichnet,** daß die Differenz $\Delta\beta(\lambda_0)$ und der Maximalwert $\chi_0(\lambda_0)$ so klein gewählt sind, daß die der vorgegebenen Wellenlänge $\lambda_0$ zugeordnete Schwebungswellenlänge $\Lambda_0$ mindestens das zweihundertbis dreihundertfache der vorgegebenen Wellenlänge $\lambda_0$ beträgt.

**5.** Anordnung nach Anspruch einem der vorhergehenden Ansprüche, dadurch **gekennzeichnet,** daß der optische Wellenleiter (10) aus einem auf einem doppelbrechenden elektrooptischen Substrat (1) integrierten Streifenwellenleiter besteht, dessen Längsachse (A) um einen kleinen Winkel ($\epsilon$) von der optischen Kristallachse (0) des Substrats (1) abweicht, der so klein gewählt ist, daß die aus dieser Abweichung resultierende Differenz $\Delta\beta(\lambda_0)$ zusammen mit dem Maximalwert $\chi_0(\lambda_0)$ die gewünschte Periodenlänge L ergibt.

**6.** Anordnung nach einem der vorhergehenden Ansprüche, insbesondere nach Anspruch 4, dadurch **gekennzeichnet,** daß der optische Wellenleiter (10) aus einem auf einem elektrooptischen Substrat (1) integrierten Wellenleiter besteht, und daß über der ganzen Strecke (S) auf beiden Längsseiten des Streifenwellenleiters (10) Elektroden ($E_B$, $E_M$) auf dem Substrat (1) angeordnet sind, mit denen durch Anlegen einer elektrischen Spannungsdifferenz ($U_B$) ein

elektrisches Feld (Ẽ) erzeugbar ist, dessen Feldlinien den Streifenwellenleiter (10) über der ganzen Strecke (S) in Richtung senkrecht zur Längsachse (A) des Streifenwellenleiters (10) von einer Längsseite zur anderen durchsetzen.

7. Anordnung nach einem der vorhergehenden Ansprüche, dadurch **gekennzeichnet,** daß zwischen dem Wellenleiter (10) und einer darüber angeordneten Einzelelektrode ($E_i$) eine optische Pufferschicht (PS) vorgesehen ist.

8. Anordnung nach einem der Ansprüche 5 bis 7, dadurch **gekennzeichnet,** daß der Streifenwellenleiter (10) aus einem dotierten Streifen in einem Substrat (1) aus Lithiumniobat besteht.

9. Anordnung nach einem der Ansprüche 5 bis 7, dadurch **gekennzeichnet,** daß der Streifenwellenleiter (10) aus einem Rippenwellenleiter auf quaternärem Material besteht.

10. Anordnung nach Anspruch 9, dadurch **gekennzeichnet,** daß das quaternäre Material aus InGaAsP/InP besteht.

11. Anordnung nach einem der vorhergehenden Ansprüche, dadurch **gekennzeichnet,** daß die Funktionsstellen ($F_i$) äquidistant angeordnet sind.

## Claims

1. Arrangement for continuous reset-free polarisation and phase control,
   - having an optical waveguide (10) in which the propagation constant $\beta_1$ of an optical wave (TE or TM mode) propagating in a specific direction (R) and the propagation constant $\beta_2$ of an optical wave (TM mode or TE mode) likewise propagating in this direction (R) and polarised orthogonally to one wave differ from one another at a prescribed wavelength $\lambda_0$, and
   - having a number N = n x m of defined functional locations ($F_i$, i = 1, 2,...,N), which are arranged at a spacing following one another in the specific direction (R) on a section (S) subdivided into subsections ($A_k$, k = 1, 2,...,m) of equal period length L in such a way that the same number n of functional locations ($F_i$) occurs in each of the m subsections ($A_k$),
   - the fixed period length L being equal to or an integral multiple of a beat

wavelength $\Lambda_0$, assigned to the prescribed wavelength $\lambda_0$, of the two waves (TE mode, TM mode),
   - the polarisation state and the phase of the two waves (TE mode, TM mode) being adjustable by means of each functional location ($F_i$),
   - the magnitude of the adjustment of the polarisation state and of the phase being determined by a variable coupling factor $\chi_i$, which is assigned to each functional location ($F_i$) and is defined by

$\chi_i = \chi_0 \sin (\eta + \chi (i)$ where i = 1, 2, ...,N

$\chi_0$ signifying a variable maximum value of the coupling factors $\chi_i$, $\eta$ being a controlled variable adjustable at least in the range from 0 to $2\pi$, and $\alpha(i)$ signifying a specific function dependent on the identifying number i of the functional locations ($F_i$),
characterised in that
a) a waveguide (10) is provided in which a difference $\Delta\beta(\lambda)$ between the mutually different propagation constants $\beta_1$ and $\beta_2$ as well as the maximum value $\chi_0(\lambda)$, which are a function of the wavelength $\lambda$, is so small in terms of absolute value at the prescribed wavelength $\lambda_0$ that the beat wavelength $\Lambda_0$ assigned to this prescribed wavelength $\lambda_0$ in accordance with the relationship

$$\Lambda_0 = \pi/\sqrt{(\Delta\beta(\lambda_0)/2)^2 + (\chi_0(\lambda_0))^2}$$

is at least one hundred times the prescribed wavelength,
b) n = 4 functional locations ($F_i$) occur on each subsection ($A_k$),
c) $\alpha(i) = (i - 1) \pi\Lambda_0/2\Lambda_1$, where i = 1,2,..., N, is selected, $\Lambda_1$ being a beat wavelength of the two mutually orthogonally polarised waves (TE mode, TM mode) which is assigned in accordance with the relationship

$$\Lambda_1 = \pi/\sqrt{(\Delta\beta(\lambda_1)/2)^2 + (\chi_0(\lambda_1))^2}$$

to an operating wavelength $\lambda_1$, at which the arrangement is actually operated, the beat wavelength $\Lambda_1$ being unequal as a rule to the beat wavelength $\Lambda_0$, which is geometrically prescribed and prescribes the assigned wavelength $\lambda_0$, but also being able to equal said beat wavelength $\Lambda_0$, it holding in general that $\Lambda_1 \neq \Lambda_0$ for

$\lambda_1 \neq \lambda_0$, and

d) each functional location ($F_i$, i = 1, 2,...,N) being defined by in each case at least one assigned single electrode ($E_i$, i = 1,2,..., N) which is arranged above the waveguide (10) and to which it is possible to apply an electrical voltage $U_i$, which is assigned to the relevant functional location ($F_i$) and is determined by

$U_i = U_0 \sin (\eta + (i-1) \cdot \pi \cdot \Lambda_0 / 2 \Lambda_1)$ where i = 1,2,...,N

$U_0$ being a variable maximum voltage which can assume the value $U_i$, and each electrical voltage $U_i$ being individually variable for each separate electrode ($E_i$, i = 1, 2,..., N).

2. Arrangement according to Claim 1, characterised in that the choice L = $\Lambda_0$ is made.

3. Arrangement according to Claim 1 or 2, characterised in that the number m of the subsections ($A_k$) having the fixed period length L varies between 5 and 10.

4. Arrangement according to one of the preceding claims, in particular according to Claim 3, characterised in that the difference $\Delta\beta(\lambda_0)$ and the maximum value $\chi_0(\lambda_0)$ are selected to be so small that the beat wavelength $\Lambda_0$ assigned to the prescribed wavelength $\lambda_0$ is at least two hundred to three hundred times the prescribed wavelength $\lambda_0$.

5. Arrangement according to one of the preceding claims, characterised in that the optical waveguide (10) comprises a strip waveguide, which is integrated on a birefringent electrooptical substrate (1) and whose longitudinal axis (A) deviates by a small angle ($\epsilon$) from the optical crystal axis (0) of the substrate (1) which is selected to be so small that the difference $\Delta\beta(\lambda_0)$ resulting from this deviation yields together with the maximum value $\chi_0(\lambda_0)$ the desired period length L.

6. Arrangement according to one of the preceding claims, in particular according to Claim 4, characterised in that the optical waveguide (10) comprises a waveguide integrated on an electrooptical substrate (1), and in that on both longitudinal sides of the strip waveguide (10) there are arranged on the substrate (1) over the entire section (S) electrodes ($E_B$, $E_M$) by means of which it is possible to produce by the application of an electrical voltage difference ($U_B$) an electric field ($\vec{E}$) whose field lines penetrates the strip waveguide (10) over the entire section (S) in the direction perpendicular to the longitudinal axis (A) of the strip waveguide (10) from one longitudinal side to the other.

7. Arrangement according to one of the preceding claims, characterised in that an optical buffer layer (PS) is provided between the waveguide (10) and a single electrode ($E_i$) arranged thereabove.

8. Arrangement according to one of Claims 5 to 7, characterised in that the strip waveguide (10) comprises a doped strip in a substrate (1) made from lithium-niobate.

9. Arrangement according to one of Claims 5 to 7, characterised in that the strip waveguide (10) comprises a rib waveguide on quaternary material.

10. Arrangement according to Claim 9, characterised in that the quaternary material comprises InGaAsP/InP.

11. Arrangement according to one of the preceding claims, characterised in that the functional locations ($F_i$) are arranged equidistantly.

**Revendications**

1. Dispositif pour la commande continue et sans remise à zéro de la polarisation et de la phase, comportant

   - un guide d'ondes optiques (10), dans lequel la constante de propagation $\beta_1$ d'une onde optique (mode TE ou TM) se propageant dans une direction déterminée (R) et la constante de propagation $\beta_2$ d'une onde optique (mode TM ou mode TE) qui se propage également dans cette direction (R) et qui est polarisée orthogonalement par rapport à une onde sont différentes pour une longueur d'onde $\lambda_0$ prédéterminée, et

   - un nombre N = n m de points définis de fonctions ($F_i$, i = 1, 2, ..., N), qui sont disposés, dans la direction déterminée (R) sur une section (S) subdivisée en des éléments de section ($A_k$, k = 1, 2, ..., m) possédant une même durée de période L, à une distance telle que le même nombre de n points de fonctions ($F_i$) est présent dans chacun des m éléments ($A_k$) de la section,

- dans laquelle la durée fixe de la période L est égale à une longueur d'onde de battement $\Lambda_0$ des deux longueurs d'onde (mode TE, mode TM), associées à la longueur d'onde prédéterminée $\beta_0$, ou à un multiple entier de cette longueur d'onde de battement,
- l'état de polarisation et la phase des deux ondes (mode TE, mode TM) peut être réglé au moyen de chaque point de fonction ($F_i$),
- l'amplitude du réglage de l'état de polarisation et de la phase est déterminée par un facteur de couplage $\chi_i$ modifiable, qui est associé à chaque point de fonction ($F_i$) et est défini par

$\chi_i = \chi_0 \sin(\eta + \alpha(i)))$ avec i = 1, 2, ..., N

$\chi_0$ désignant une valeur maximale variable des facteurs de couplage $\chi_i$, $\eta$ une grandeur de commande réglable au moins dans la gamme allant de 0 à $2\pi$, et $\alpha(i)$ une fonction déterminée qui dépend du nombre caractéristique i du point de fonction ($F_i$),
caractérisé par le fait que
a) il est prévu un guide d'ondes (10), dans lequel une différence $\Delta\beta(\lambda)$ entre les constantes de propagation différentes $\beta_1$ et $\beta_2$ ainsi que la valeur maximale $\chi_0(\lambda)$, qui sont fonction de la longueur d'onde $\lambda$, possède une valeur absolue suffisamment faible pour la longueur d'onde $\lambda_0$, que la longueur d'onde de battement $\Lambda_0$ associée à cette longueur d'onde $\lambda_0$ prédéterminée conformément à la relation

$$\Lambda_0 = \pi / \sqrt{(\Delta\beta(\lambda_0)/2)^2 + (\chi_0(\lambda_0))^2}$$

est égale au moins au centuple de la longueur d'onde $\lambda_0$ prédéterminée,
b) n = 4 points de fonction ($F_i$) sont affectés à chaque élément ($A_k$) de la section,
c) $\alpha(i) = (i-1) \pi\Lambda_0/2.\Lambda_1$ est choisi, avec i = 1, 2, ..., N, $\Lambda_1$ étant une longueur d'onde de battement des deux ondes polarisées orthogonalement l'une par rapport à l'autre (mode TE, mode TM), qui est associée, conformément à la relation

$$\Lambda_1 = \pi / \sqrt{(\Delta\beta(\lambda_1)/2)^2 + (\chi_0(\lambda_1))^2}$$

à une longueur d'onde de service $\lambda_1$,

avec laquelle le dispositif fonctionne effectivement, la longueur d'onde de battement $\Lambda_1$ étant en général différente de la longueur d'onde de battement $\Lambda_0$ qui est prédéterminée géométriquement et prédétermine la longueur d'onde associée $\lambda_0$, mais peut être aussi égale à cette longueur d'onde de battement, auquel cas on a d'une manière générale $\Lambda_1 \neq \Lambda_0$ pour $\lambda_1 \neq \lambda_0$, et
d) chaque point de fonction ($F_i$, i = 1, 2, ..., N) est défini respectivement par au moins une électrode individuelle ($E_i$, i = 1, 2, ..., N) associée par l'intermédiaire du guide d'ondes (10) et à laquelle peut être appliquée une tension électrique $U_i$ associée au point de fonction ($F_i$) considéré et qui est déterminé par

$U_i = U_0 \sin(\eta + (i-1)\pi \Lambda_0/2 \Lambda_1)$ avec i = 1, 2, ..., N

$U_0$ étant une tension maximale variable que peut prendre la tension $U_i$, et chaque tension électrique $U_i$ pouvant être modifiée individuellement pour chaque électrode séparée ($E_i$, i = 1, 2, ..., N).

2. Dispositif suivant la revendication 1, caractérisé par le fait qu'on choisit L = $\Lambda_0$.

3. Dispositif suivant la revendication 1 ou 2, caractérisé par le fait que le nombre m des éléments ($A_k$) de la section varie avec la durée fixe de la période L entre 5 et 10.

4. Dispositif suivant l'une des revendications précédentes, notamment la revendication 3, caractérisé par le fait que la différence $\Delta\beta(\lambda_0)$ et la valeur maximale $\chi_0(\lambda_0)$ sont choisies suffisamment faibles pour que la longueur d'onde de battement $\Lambda_0$, associée à la longueur d'onde prédéterminée $\lambda_0$, soit égale au moins entre 200 et 300 fois la longueur d'onde prédéterminée $\lambda_0$.

5. Dispositif suivant l'une des revendications précédentes, caractérisé par le fait que le guide d'ondes optiques (10) est constitué par un guide d'ondes en forme de bande intégré sur un substrat électro-optique biréfringent (1) et dont l'axe longitudinal (A) s'écarte de l'axe optique cristallin (0) du substrat (1), d'un petit angle ($\epsilon$) qui est choisi suffisamment faible pour que la différence $\Delta\beta(\lambda_0)$, qui résulte de cet écart, fournisse, avec la valeur maximale $\chi_0(\lambda_0)$, la durée de période désirée L.

**6.** Dispositif suivant l'une des revendications précédentes, notamment suivant la revendication 4, caractérisé par le fait que le guide d'ondes optiques (10) est constitué par un guide d'ondes intégré sur un substrat électro-optique (1) et que sur toute la section (S), sur les deux côtés longitudinaux du guide d'ondes en forme de bande (10) sont disposées, sur le substrat (1), des électrodes ($E_B$, $E_M$), à l'aide desquels peut être produit, par application d'une différence de tension électrique ($U_B$), un champ électrique ($\vec{E}$), dont les lignes de champ traversent le guide d'ondes en forme de bande (10), sur toute la section (S), dans une direction perpendiculaire à l'axe longitudinal (A) du guide d'ondes en forme de bande (10), d'un côté longitudinal à l'autre.

**7.** Dispositif suivant l'une des revendications précédentes, caractérisé par le fait qu'une couche tampon optique (PS) est prévue entre le guide d'ondes (10) et une électrode individuelle ($E_i$) disposée sur ce guide d'ondes.

**8.** Dispositif suivant l'une des revendications 5 à 7, caractérisé par le fait que le guide d'ondes en forme de bande (10) est constitué par une bande dopée dans un substrat (1) formé de niobate de lithium.

**9.** Dispositif suivant l'une des revendications 5 à 7, caractérisé par le fait que le guide d'ondes en forme de bande (10) est constitué par un guide d'ondes nervuré réalisé en un matériau quaternaire.

**10.** Dispositif suivant la revendication 9, caractérisé par le fait que le matériau quaternaire est constitué par du InGaAsP/InP.

**11.** Dispositif suivant l'une des revendications précédentes, caractérisé par le fait que les points de fonctions ($F_i$) sont équidistants.

FIG 1

FIG 2

FIG 3